# EUROPÄISCHE PATENTSCHRIFT

(11) **EP 1 391 141 B1**
(45) Veröffentlichungstag und Bekanntmachung des Hinweises auf die Patenterteilung: **11.09.2019**
(21) Anmeldenummer: 02730211.6
(22) Anmeldetag: 25.04.2002
(51) Int. Cl.: H05B 3/74, G05D 23/19

(54) **VERFAHREN UND VORRICHTUNG ZUR BEGRENZUNG UND/ODER STEUERUNG DER OBERFLÄCHENTEMPERATUR EINES KOCHFELDS**
METHOD AND DEVICE FOR LIMITING AND/OR CONTROLLING THE SURFACE TEMPERATURE OF A HOB
PROCEDE ET DISPOSITIF POUR LIMITER ET/OU REGULER LA TEMPERATURE SUPERFICIELLE D'UNE PLAQUE DE CUISSON

(30) Priorität: 09.05.2001 DE 10122427
(43) Veröffentlichungstag der Anmeldung: 25.02.2004
(73) Patentinhaber: BSH Hausgeräte GmbH, 81739 München (DE)
(72) Erfinder: STEINER, Herbert, 83278 Traunstein (DE); RAMONES, Tonoha, 83278 Traunstein (DE); ZSCHAU, Günter, 83301 Traunreut (DE); BLUMENTHAL, Peter, 83278 Traunstein (DE); HUBER, Johann, 83334 Inzell (DE); MARBACH, Andreas, 83374 Traunwalchen (DE); ZERASCHI, Monika, 83301 Traunreut (DE); STITZL, Bernd, 83362 Lauter (DE); FUCHS, Franz, 94336 Hunderdorf (DE); NEUMAYER, Dan, 83233 Bernau (DE); GARCIA, Jose-Andres, 83278 Traunreut (DE); SCHWEIDLER, Ernst, 83371 Stein/Traun (DE)
(86) Internationale Anmeldenummer: PCT/EP2002/004600
(87) Internationale Veröffentlichungsnummer: WO 2002/091802

(56) Entgegenhaltungen:
- EP-A- 0 658 067
- EP-A- 0 886 459
- DE-A- 19 617 319
- DE-A- 19 648 196
- DE-A- 19 851 029

## Beschreibung

Die Erfindung betrifft ein Verfahren zur Begrenzung und/oder Steuerung der Oberflächentemperatur eines über eine Energiequelle beheizten, mit einem Temperaturbegrenzer versehenen Kochfelds, gemäß dem Oberbegriff des Patentanspruchs 1. Die Erfindung betrifft weiterhin eine Vorrichtung zur Durchführung dieses Verfahrens.

Die Kochfelder moderner Glaskeramikkochflächen werden so hergestellt, dass sich für den praktischen Gebrauch eine niedrige thermische Ausdehnung des Glaskeramikmaterials einstellt. Treten im Gebrauch unzulässig hohe Temperatur-/Zeit-Belastungen auf, kann aufgrund dieser Extrembelastungen das Gefüge des Materials verändert werden und es im äußersten Fall zur Zerstörung der Glaskeramikkochfläche kommen.

Zur Überwachung der Oberflächentemperatur solcher Kochfelder ist es aus der Praxis bekannt, Betriebstemperaturbegrenzer vorzusehen, die so eingestellt werden, dass während einer vorgegebenen Mindestlebensdauer des Kochfelds und bei einer angenommenen Benutzungshäufigkeit die zulässige Temperatur-/Zeit-Belastung der Glaskeramikkochfläche nicht überschritten wird. Hierzu ist es bekannt, mechanische Betriebstemperaturbegrenzer, wie beispielsweise Stabausdehnungsregler, oder auch elektronische Betriebstemperaturbegrenzer zu verwenden. Die bekannten Stabausdehnungsregler haben den Nachteil, dass ihr Schaltpunkt nur auf ca. ± 20 K eingestellt werden kann, so dass die zulässige Maximaltemperatur nicht exakt justierbar ist. Der zu justierende Schaltpunkt ist außerdem abhängig von der noch zulässigen Erwärmung der Wandflächen, die sich hinter und/oder neben dem Kochfeld befinden, wenn ein Kochfeld unbeabsichtigter Weise ohne Kochgefäß betrieben wird. Um hier den Sicherheitsansprüchen zu genügen, muß die Begrenzungstemperatur oft weit unterhalb des Werts justiert werden, der bezüglich der Belastbarkeit des Glaskeramikmaterials eigentlich möglich wäre. Dies kann zu Nachteilen in der Gebrauchstauglichkeit führen, insbesondere hinsichtlich der Ankochzeiten.

Aus der DE 198 51 029 A1 ist ein Verfahren zur elektronischen Begrenzung der Oberflächentemperatur einer Glas-/Glaskeramikkochfläche bekannt. Bei diesem bekannten Verfahren wird fortlaufend in Intervallen die Temperatur-/Zeit-Belastung durch Temperatur-/Zeit-Wertepaare gemessen und abhängig vom Vergleich mit einer vorgegebenen Soll-Belastung die Betriebsgrenztemperatur der Glas-/Glaskeramik verändert. Diese bekannte elektronische Begrenzung der Oberflächentemperatur ermöglicht somit eine Anpassung eines nachfolgenden Kochvorgangs an die gemessene tatsächliche bisherige Belastung des Kochfelds.

Die EP 0 866 459 A2 offenbart ein Verfahren und eine Vorrichtung zur Regelung einer Heizeinheit eines Glaskeramikkochfeldes. Ein elektrischer Heizkörper, der unterhalb einer Glaskeramik-Kochfläche angeordnet ist, wird mit Hilfe eines Temperatursensors gesteuert, der dazu ausgelegt ist, eine Temperatur an der Glaskeramik-Kochfläche oder angrenzend dazu zu überwachen.

Aus der EP 0658 067 A1 ist eine Steuerung für Haushaltsgeräte zur Auswertung von Sensorsignalen, insbesondere für Strahlungsheizungen bei Glaskeramik-Kochflächen bekannt. Die Steuerung leistet dabei eine Topferkennung und schaltet im Falle eines Kochstellen-Leerlaufs die Strahlungsheizung ab.

Die DE 196 17 319 A1 offenbart ein Verfahren zum Kochen von zu garendem Gut durch Zufuhr von Heizleistung zu einer Kochstelle, auf der sich ein Behälter mit dem Gut befindet.

Es besteht bei den aus der Praxis bekannten Verfahren der Nachteil, dass die Betriebstemperaturbegrenzer nicht erfassen können, ob es sich beim Vorliegen der maximal zulässigen Oberflächentemperatur über einen vorgegebenen Zeitraum um einen Störfall, wie beispielsweise das Beheizen einer leeren Kochfläche handelt, oder, ob ein extremer Kochvorgang vorliegt, der eine hohe Betriebstemperatur über eine lange Betriebsdauer benötigt, wie dies beispielsweise beim längeren Frittieren der Fall sein kann.

Davon ausgehend liegt der Erfindung die Aufgabe zugrunde, ein Verfahren zur Begrenzung und/oder Steuerung der Oberflächentemperatur eines über eine Energiequelle beheizten Kochfelds bereitzustellen, das flexibel einsetzbar ist und das gegebenenfalls erkennen läßt, ob ein üblicher, extremer oder unzulässiger Kochvorgang vorliegt. Weiterhin liegt der Erfindung die Aufgabe zugrunde, eine Vorrichtung zur Durchführung des Verfahrens bereitzustellen.

Diese Aufgabe wird bei einem gattungsgemäßen Verfahren durch die kennzeichnenden Merkmale des Anspruchs 1 und bei einer gattungsgemäßen Vorrichtung durch die kennzeichnenden Merkmale des Anspruchs 7 gelöst. Bevorzugte Ausführungsformen sind in den abhängigen Ansprüchen angegeben.

Gemäß der Erfindung ist ein Schalttemperatur-Zeit-Verlauf für einen Kochvorgang vorgeben, an die Schalttemperatur eines Temperaturbegrenzers während des Kochvorgangs angepasst wird. Die Steuerung der Schalttemperatur des Temperaturbegrenzers erfolgt dabei derart, dass die Ist-Temperatur der Kochfläche fortlaufend gemessen und mit dem abgespeicherten Schalttemperatur-Zeit-Profil verglichen wird, um die Schalttemperatur des Temperaturbegrenzers in Abhängigkeit vom Resultat dieses Vergleichs während des Kochvorgangs entsprechend zu verändern.Eine Anpassung der Schalttemperatur des Temperaturbegrenzers kann auch nach fest vorgegebenen Zeitschritten erfolgen. Durch die Anpassung der Schalttemperatur während des Kochvorgangs ist es möglich, die Oberflächentemperatur immer so einzustellen, dass ein möglichst effektiver Kochvorgang stattfinden kann und die zulässige Oberflächentemperatur und auch die Möbelanstelltemperatur zu anderen Möbeln nicht überschritten wird.

Die Schalttemperatur des Temperaturbegrenzers wird herabgesetzt, wenn der Vergleich ein Erreichen oder Überschreiten des abgespeicherten Schalttemperatur-Zeit-Profils ergibt. Gegenüber dem aus dem Stand der Technik bekannten Abschalten der Energiezufuhr bei Erreichen oder Überschreiten der Schalttemperatur weist das Herabsetzen der Schalttemperatur den Vorteil auf, dass der Kochvorgang nicht unterbrochen wird, so dass der Benutzer des Kochfelds kaum eine Veränderung des Kochvorgangs bemerken wird.

Um sicherzustellen, dass beim Vorliegen eines unzulässigen Kochvorgangs, wie dies beispielsweise das Leerkochen der Kochfläche darstellt, die Energiezufuhr zum Kochfeld unterbrochen wird, entspricht das abgespeicherte Schalttemperatur-Zeit-Profil diesem unzulässigen Kochvorgang des Leerkochens.

Gemäß einer weiteren bevorzugten Ausführungsform wird zu Beginn eines Kochvorgangs die Schalttemperatur des elektronischen Temperaturbegrenzers auf einen maximalen Wert eingestellt, um einen schnellen Ankochvorgang zu ermöglichen. Abhängig von der gewählten Kochstufe wird nach mehreren Taktzyklen des Temperaturbegrenzers und/oder nach einem vorgegebenen Zeitintervall die Schalttemperatur abgesenkt. Dabei wird überwacht, ob und wie oft in einem Taktzyklus oder Zeitintervall die Schalttemperatur erreicht wird.

Weitere Merkmale und Vorteile der Erfindung ergeben sich anhand der nachfolgenden Beschreibung der zugehörigen Zeichnung, in der der Aufbau einer erfindungsgemäßen Vorrichtung sowie ein Ablaufplan des erfindungsgemäßen Verfahrens nur beispielhaft schematisch dargestellt sind. In der Zeichnung zeigt:
- Figur 1: eine schematische Seitenansicht einer erfindungsgemäßen Vorrichtung zur Begrenzung und/oder Steuerung der Oberflächentemperatur eines Kochfelds;
- Figur 2: ein schematisches Temperatur-Zeit-Diagramm und
- Figur 3: einen schematischen Ablaufplan des erfindungsgemäßen Verfahrens.

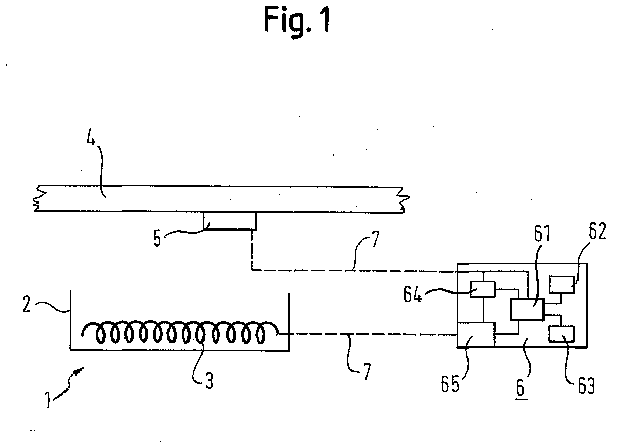

Die Abbildung Figur 1 zeigt eine an sich bekannte Kochmulde 1 mit einer in einem Isolationskörper 2 angeordneten Energiequelle 3, beispielsweise einer Heizwendel. Zum Aufsetzen und Beheizen von Töpfen, Pfannen und dergleichen weist die Kochmulde 1 eine Kochfläche 4 aus einem Glaskeramikwerkstoff auf.

Die dargestellte Vorrichtung umfaßt weiterhin einen an der Unterseite der Kochfläche 4 angeordneten Temperatursensor 5 sowie eine Steuereinheit 6 mit einem Prozessor 61. Der Temperatursensor 5 kann zwischen der Heizwendel und der Glaskeramikkochfläche 4 oder auch unmittelbar an der Glaskeramik der Kochfläche 4 angeordnet sein. Der Prozessor der Steuereinheit 6 ist über Leitungen 7 mit dem Temperatursensor 5 sowie einem Steuereingang für die Energiequelle 3 verbunden. Die Steuereinheit 6 umfaßt ferner eine Zeitmesseinrichtung 62, einen elektronischen Speicher 63, in dem wenigstens ein vorgegebenes Schalttemperatur-Zeit-Profil abgespeichert ist, einen Temperaturbegrenzer 64 mit veränderbarer Schalttemperatur sowie ein Schaltglied 65 zum Steuern der Energiequelle 3.

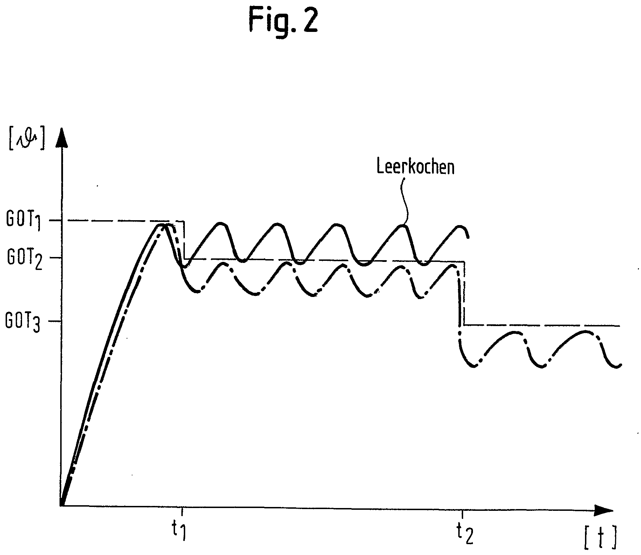

Figur 2 zeigt exemplarisch den Temperatur-Zeit-Verlauf des Kochvorgangs "Leerkochen" sowie den Temperatur-Zeit-Verlauf eines Kochvorgangs, bei dem die Oberflächentemperatur des Kochfelds gemäß dem vorliegenden Verfahren gesteuert wurde.

Wie aus der Abbildung ersichtlich, zeichnet sich der mit der durchgezogenen Linie gekennzeichnete unzulässige Leerkochvorgang dadurch aus, dass die Kochfläche 4 bis zur eingestellten maximalen Schalttemperatur des Temperaturbegrenzers 64 aufgeheizt wird. Sobald diese Glasoberflächentemperatur (GOT) erreicht ist, schaltet der Temperaturbegrenzer 64 die Energiezufuhr über das Schaltglied 65 ab, bis sich die Kochfläche 4 wieder bis auf einen vorgebbaren Wert abgekühlt hat. Da beim Leerkochen keine Hitze an ein Gargut oder ein Kochgeschirr abgeführt wird, wird die Kochfläche 4 anschließend wieder bis zum Erreichen der maximalen Schalttemperatur aufgeheizt. Dieser alternierende Vorgang wiederholt sich bei diesem unzulässigen Kochvorgang fortlaufend. Neben der sich daraus ergebenden unnötigen Temperaturbeanspruchung der Glaskeramikkochfläche 4 besteht bei diesem Vorgang die Gefahr, dass die Möbelanstelltemperatur des Kochherds überschritten wird und somit die an den Herd angrenzenden Möbel Schaden nehmen können.

Im Gegensatz zu dem voranstehend beschriebenen unzulässigen Kochvorgang wird bei dem strichpunktiert dargestellten zulässigen Kochvorgang die zunächst maximal eingestellte Glasoberflächentemperatur GOT₁ nach dem Erreichen dieser Temperatur in der Ankochphase auf den Wert GOT₂ herabgesetzt, so dass die Glaskeramikkochfläche 4 nicht übermäßig einer hohen Temperaturbelastung ausgesetzt ist. Der zulässige Kochvorgang ist als Schalttemperatur-Zeit-Profil im elektronischen Speicher 63 der Steuereinheit 6 hinterlegt.

Die Herabsetzung der Schalttemperatur von GOT₁ auf GOT₂ kann dabei so gesteuert werden, dass fortlaufend die Ist-Temperatur mit dem Temperatursensor 5 gemessen und im Prozessor 61 der Steuereinheit 6 mit dem vorgegebenen Schalttemperatur-Zeit-Profil im elektronischen Speicher 63 verglichen wird, um die Schalttemperatur des Temperaturbegrenzers 64 entsprechend dem vorgegebenen Schalttemperatur-Zeit-Profil einzustellen. Es besteht aber auch die Möglichkeit, dass der Prozessor 61 nach Verstreichen einer vorgegebenen Zeitspanne t₁, die mit der Zeitmesseinrichtung 62 erfasst wird ,die Schalttemperatur des Temperaturbegrenzers 64 automatisch von GOT₁ auf GOT₂ herabgesetzt, wobei die Zeitspanne t₁ der üblichen Ankochphase entspricht. Ebenso kann dann nach Verstreichen einer weiteren Zeitspanne t₂ die Schalttemperatur automatisch von GOT₂ auf GOT₃ herabgesetzt werden, um z.B. zu verhindern, dass die zulässige Möbelanstelltemperatur überschritten wird. Auch diese weitere Temperaturherabsetzung kann alternativ über einen Temperaturmessvorgang gesteuert werden.

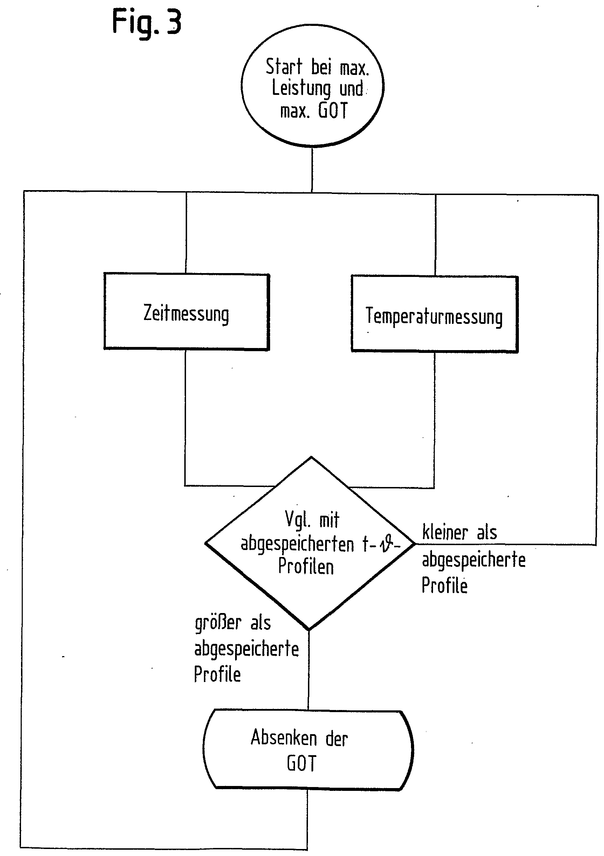

Die Abbildung Figur 3 zeigt den Ablaufplan des Verfahrens, bei dem die Temperaturherabsetzung mittels eines Temperaturmessvorgangs gesteuert wird. Nach dem Start des Kochvorgangs bei maximaler Leistung und einem maximalen Wert der Glasoberflächentemperatur (GOT) wird über den Temperatursensor 5 die Oberflächentemperatur der Kochfläche 4 gemessen und die Zeitmesseinrichtung der Steuereinheit 6 gestartet.

Die fortlaufend während des Kochvorgangs ermittelten Temperatur-Zeit-Verläufe werden in dem Prozessor 61 der Steuereinheit 6 mit dem im elektronischen Speicher 63 abgespeicherten Temperatur-Zeit-Profile verglichen. Liegen die gemessenen Ist-Werte unterhalb der abgespeicherten Temperatur-Zeit-Wertepaare, wird der Kochvorgang mit der derzeit gültigen Schalttemperatur des Temperaturbegrenzers 64 fortgesetzt, da gewährleistet ist, dass zur Zeit ein zulässiger Kochvorgang stattfindet.

Sobald beim Vergleich der Ist-Werte mit den abgespeicherten Temperatur-Zeit-Wertepaaren festgestellt wird, dass diese erreicht oder sogar überschritten werden, wird über die Steuereinheit 6 die Schalttemperatur des Temperaturbegrenzers 64 herabgesetzt.

Das vorliegende Verfahren zeichnet sich dadurch aus, dass während eines laufenden Kochvorgangs ermittelt werden kann, ob ein zulässiger oder ein unzulässiger Kochvorgang vorliegt und noch während des Kochvorgangs die Schalttemperatur des Temperaturbegrenzers 64 aufgrund der Auswertung der Temperaturüberwachung der Kochfläche 4 veränderbar ist.

## Patentansprüche

1. Verfahren zur Begrenzung und/oder Steuerung der Oberflächentemperatur eines über eine Energiequelle (3) beheizten, mit einem Temperaturbegrenzer (64) versehenen Kochfelds mit einer Glaskeramikkochfläche (4), wobei die Schalttemperatur des Temperaturbegrenzers (64) entsprechend einem vorgegebenen Schalttemperatur-Zeit-Profil während des Kochvorgangs verändert wird, **dadurch gekennzeichnet, dass** der Temperatur-Zeit-Verlauf an der Kochfläche fortlaufend gemessen und mit dem vorgegebenen Schalttemperatur-Zeit-Profil verglichen wird, um die Schalttemperatur des Temperaturbegrenzers (64) in Abhängigkeit vom Resultat dieses Vergleichs während des Kochvorgangs anzupassen, wobei die Schalttemperatur des Temperaturbegrenzers (64) herabgesetzt wird, wenn der Vergleich ein Erreichen oder Überschreiten des vorgegebenen Temperatur-Zeit-Profils ergibt.

2. Verfahren nach Anspruch 1, **dadurch gekennzeichnet, dass** die Schalttemperatur des Temperaturbegrenzers (64) entsprechend dem vorgebenden Zeitlauf des Schalttemperatur-Zeit-Profils während des Kochvorgangs angepasst wird.

3. Verfahren nach einem der vorherigen Ansprüche, **dadurch gekennzeichnet, dass** das vorgegebenen Temperatur-Zeit-Profil dem Leerkochvorgang des Kochfelds entspricht und das Ermitteln dieses, einen unzulässigen Kochvorgang darstellenden Temperatur-Zeit-Verlaufs eine Sicherheitsabschaltung der Energiequelle (3) bewirkt.

4. Verfahren nach einem der vorherigen Ansprüche, **dadurch gekennzeichnet, dass** zu Beginn eines Kochvorgangs die Schalttemperatur des Temperaturbegrenzers (64) auf einen maximalen Wert eingestellt wird und anschließend in Abhängigkeit von der gewählten Kochstufe nach mehreren Taktzyklen des Temperaturbegrenzers (64) und/oder nach einem vorgegebenen Zeitintervall die Schalttemperatur des Temperaturbegrenzers (64) während des Kochvorgangs abgesenkt wird.

5. Vorrichtung zur Begrenzung und/oder Steuerung der Oberflächentemperatur eines über eine Energiequelle (3) beheizten Kochfelds mit einer Glaskeramikkochfläche (4), zur Durchführung des Verfahrens nach einem der Ansprüche 1 bis 4, mit einer Steuereinheit (6) und einem Temperaturbegrenzer (64), wobei die Steuereinheit (6) einen Speicher (63) zum Einspeichern eines vorgegebenen Schalttemperatur-Zeit-Profils während des Kochvorgangs und einen Prozessor (61) zum Einstellen der Schalttemperatur des Temperaturbegrenzers (64) entsprechend dem eingespeicherten Schalttemperatur-Zeit-Profil aufweist, wobei ein die Oberflächentemperatur der Glaskeramikkochfläche (4) erfassender Temperatursensor (5) vorgesehen ist, **dadurch gekennzeichnet, dass** der Prozessor (61) der Steuereinheit (6) den vom Temperatursensor (5) an der Kochfläche fortlaufend gemessenen Temperatur-Verlauf während des Kochvorgangs mit dem abgespeicherten Temperatur-Zeit-Profil vergleicht, um die Schalttemperatur des Temperaturbegrenzers (64) entsprechend anzupassen, wenn der Vergleich ein Erreichen oder Überschreiten des vorgegebenen Temperatur-Zeit-Profils ergibt.

6. Vorrichtung nach Anspruch 5, **dadurch gekennzeichnet, dass** die Steuereinheit (6) eine Zeitmesseinrichtung (62) zum Erfassen der Kochzeit aufweist, wobei der Prozessor (61) der Steuereinheit (6) die Schalttemperatur des Temperaturbegrenzers (64) entsprechend dem eingespeicherten Zeitlauf des Schalttemperatur-Zeit-Profils während des Kochvorgangs anpasst.

## Claims

1. Method for limiting and/or controlling the surface temperature of a hob with a glass-ceramic cooktop (4) heated by means of an energy source (3) and fitted with a temperature limiter (64), wherein the switching temperature of the temperature limiter (64) is changed in accordance with a predetermined switching temperature-time profile during the cooking process, **characterised in that** the temperature-time curve on the cooktop is measured continuously and compared with the predetermined switching temperature-time profile in order to adapt the switching temperature of the temperature limiter (64) as a function of the result of this comparison during the cooking process, wherein the switching temperature of the temperature limiter (64) is reduced if the comparison indicates that the predetermined temperature-time profile has been reached or exceeded.

2. Method according to claim 1, **characterised in that** the switching temperature of the temperature limiter (64) is adapted according to the predetermining time period of the switching temperature-time profile during the cooking process.

3. Method according to one of the preceding claims, **characterised in that** the predetermined temperature-time profile corresponds to the empty cooking process of the hob and the determination of this temperature-time curve representing an impermissible cooking process effects a safety deactivation of the energy source (3).

4. Method according to one of the preceding claims, **characterised in that** the switching temperature of the temperature limiter (64) is set to a maximum value at the start of a cooking process and the switching temperature of the temperature limiter (64) is then reduced according to the selected heat setting after several clock cycles of the temperature limiter (64) and/or after a predetermined time interval.

5. Device for limiting and/or controlling the surface temperature of a hob with a glass-ceramic cooktop (4) heated by means of an energy source (3) for carrying out the method according to one of claims 1 to 4, with a control unit (6) and a temperature limiter (64), wherein the control unit (6) has a memory store (63) for storing a predetermined switching temperature-time profile during the cooking process and a processor (61) for setting the switching temperature of the temperature limiter (64) according to the stored switching temperature-time profile, wherein a temperature sensor (5) is provided to determine the surface temperature of the glass-ceramic cooktop (4), **characterised in that** the processor (61) of the control unit (6) compares the temperature curve measured continuously by the temperature sensor (5) on the cooktop with the stored temperature-time profile during the cooking process in order to adapt the switching temperature of the temperature limiter (64) accordingly if the comparison indicates that the predetermined temperature-time profile has been reached or exceeded.

6. Device according to claim 5, **characterised in that** the control unit (6) has a time measurement apparatus (62) for determining the cooking time, wherein the processor (61) of the control unit (6) adapts the switching temperature of the temperature limiter (64) according to the stored time period of the switching temperature-time profile during the cooking process.

## Revendications

1. Procédé de limitation et/ou de commande de la température superficielle d'un champ de cuisson chauffé via une source d'énergie (3), dotée d'un limiteur de température (64) avec une surface de cuisson vitrocéramique (4), dans lequel la température de commutation du limiteur de température (64) est, durant le processus de cuisson, modifiée conformément à un profil durée-température de commutation préalablement établi, **caractérisé en ce que** le tracé durée-température est mesuré en permanence sur la surface de cuisson et comparé au profil durée-température de commutation préalablement établi, pour adapter durant le processus de cuisson la température de commutation du limiteur de température (64) en fonction du résultat de cette comparaison, dans lequel la température de commutation du limiteur de température (64) est réduite lorsque la comparaison révèle une atteinte ou un dépassement du profil durée-température préalablement établi.

2. Procédé selon la revendication 1, **caractérisé en ce que** la température de commutation du limiteur de température (64) est adaptée conformément à la longueur temporelle pré-établissante du profil durée-température de commutation durant le processus de cuisson.

3. Procédé selon l'une des revendications précédentes, **caractérisé en ce que** le profil durée-température préalablement établi correspond au processus de cuisson à vide du champ de cuisson et la détermination de ce tracé durée-température représentant un processus de cuisson non autorisé induit une coupure de sécurité de la source d'énergie (3).

4. Procédé selon l'une des revendications précédentes, **caractérisé en ce qu'**au début d'un processus de cuisson, la température de commutation du limiteur de température (64) est réglée selon une valeur maximale et la température de commutation du limiteur de température (64) est ensuite réduite durant le processus de cuisson, en fonction du niveau de cuisson sélectionné, après plusieurs cycles de cadencement du limiteur de température (64) et/ou après un intervalle de temps préalablement établi.

5. Dispositif de limitation et/ou de commande de la température superficielle d'un champ de cuisson chauffé via une source d'énergie (3) avec une surface de cuisson vitrocéramique (4), pour l'exécution du procédé selon l'une des revendications 1 à 4, avec une unité de commande (6) et un limiteur de température (64), dans lequel l'unité de commande (6) présente une mémoire (63) pour l'enregistrement d'un profil durée-température de commutation préalablement établi durant le processus de cuisson et un processeur (61) pour le réglage de la température de commutation du limiteur de température (64) en fonction du profil durée-température de commutation enregistré, dans lequel un capteur de température (5) percevant la température surfacique de la surface de cuisson vitrocéramique (4) est prévu, **caractérisé en ce que** le processeur (61) de l'unité de commande (6) compare l'évolution de la température mesurée en permanence par le capteur de température (5) sur la surface de cuisson durant le processus de cuisson au profil durée-température enregistré, pour adapter la température de commutation du limiteur de température (64) en conséquence, lorsque la comparaison révèle une atteinte ou un dépassement du profil durée-température préalablement établi.

6. Dispositif selon la revendication 5, **caractérisé en ce que** l'unité de commande (6) présente un dispositif de chronométrage (62) pour la saisie de la durée de cuisson, dans lequel le processeur (61) de l'unité de commande (6) adapte la température de commutation du limiteur de température (64) en fonction de la longueur temporelle enregistrée du profil durée-température de commutation durant le processus de cuisson.
